# EUROPÄISCHE PATENTSCHRIFT

(11) **EP 3 027 915 B1**
(45) Veröffentlichungstag und Bekanntmachung des Hinweises auf die Patenterteilung: **23.12.2020**
(21) Anmeldenummer: 14748114.7
(22) Anmeldetag: 29.07.2014
(51) Int. Cl.: F16B 23/00, F16B 41/00, B25B 15/00

(54) **VERBINDUNGSELEMENT EINES VERBINDUNGSSYSTEMS, WERKZEUG ZUM VERBINDEN, LÖSEN UND PRÜFEN DES VERBINDUNGSELEMENTES, VERFAHREN ZUM VERSEHEN EINES VERBINDUNGSSYSTEMS MIT EINER VERSCHLUSSVERSIEGELUNG UND/ ODER EINER MOMENTENANZEIGE**
CONNECTION ELEMENT OF A CONNECTION SYSTEM, TOOL FOR CONNECTING, RELEASING AND CHECKING THE CONNECTION ELEMENT, METHOD FOR PROVIDING A CONNECTION SYSTEM WITH A CLOSURE SEAL AND/OR A TORQUE INDICATOR
ÉLÉMENT DE LIAISON D'UN SYSTÈME DE LIAISON, OUTIL SERVANT À LIER, DÉLIER ET CONTRÔLER L'ÉLÉMENT DE LIAISON ET PROCÉDÉ POUR MUNIR UN SYSTÈME DE LIAISON D'UN ÉLÉMENT DE SCELLEMENT DE FERMETURE ET/OU UNE INDICATION DE COUPLE

(30) Priorität: 30.07.2013 DE 102013012577
(43) Veröffentlichungstag der Anmeldung: 08.06.2016
(73) Patentinhaber: Rathmann, Robert, 39261 Zerbst (DE); Keiner, Steven, 39264 Lindau (DE)
(72) Erfinder: Rathmann, Robert, 39261 Zerbst (DE); Keiner, Steven, 39264 Lindau (DE)
(74) Vertreter: Hecht, Jan-David
(86) Internationale Anmeldenummer: PCT/EP2014/002065
(87) Internationale Veröffentlichungsnummer: WO 2015/014480

(56) Entgegenhaltungen:
- EP-A2- 1 477 689
- WO-A1-00/58056
- DE-A1- 10 320 655
- DE-A1-102011 012 994
- DE-U1- 29 903 686
- FR-A5- 2 204 243
- US-A- 4 187 892
- US-A- 4 203 382
- US-A- 5 449 260
- US-A1- 2013 047 797

## Beschreibung

Die vorliegende Erfindung betrifft ein Verbindungselement eines Verbindungssystems nach dem Oberbegriff von Anspruch 1, sowie ein Verfahren zum Versehen eines Verbindungssystems mit einer Verschlussversiegelung und/oder einer Momentenanzeige nach dem Oberbegriff von Anspruch 12.

Es sind zahlreiche lösbare Verbindungssysteme bekannt, beispielsweise geschraubte Verbindungssysteme umfassend Schrauben und ggf. zugehörige Muttern. Zum Fixieren und Lösen der Verbindung sind üblicherweise an das spezielle Verbindungssystem angepasste Werkzeuge bereitgestellt. Diese Werkzeuge weisen eine Werkzeugwirkungsfläche auf, die korrespondierend zu einer Werkzeugangriffsfläche an zumindest einem der Verbindungselemente des Verbindungssystems ausgebildet ist. Bei Schrauben ist die Werkzeugangriffsfläche der Antrieb.

Bezüglich solcher Verbindungssysteme besteht ein großer Wunsch der Industrie, diese so zu gestalten, dass ein unbefugtes Lösen direkt erkennbar ist bzw. ganz verhindert wird.

Für die letzt genannte Variante wurden in der Vergangenheit immer neue Geometrien der Antriebe von Schrauben entwickelt, um zu verhindern, dass Unbefugte mit den ihnen vorliegenden Werkzeugen diese Verbindungssysteme überhaupt lösen und fixieren können (siehe z.B. FR 2 204 243 A). Dazu zählen unter anderem der Tri-Wing-Antrieb, der Torq-Set-Antrieb, der Pentalob-Antrieb und der Torx®-Tamper-Antrieb. Diese Gestaltungen haben den Nachteil, dass für solche Antriebe spätestens nach einer gewissen Zeit die Normwerkzeuge für jedermann zur Verfügung stehen, eine Manipulation damit auch für Unbefugte unerkannt möglich wird.

Eine andere Variante ist in der DE 696 33 832 T2 und der US 2008/0205974 A1 beschrieben. Darin ist ein Verbindungssystem mit Schrauben und Muttern beschrieben, bei dem die Schrauben Einkerbungen besitzen und die Muttern federnde Zinken, die in einer Fixierungsrichtung über die Einkerbungen streichen in einer Löserichtung sich jedoch ohne das passende Werkzeug mit den Einkerbungen verhaken, so dass ein Lösen ohne passendes Werkzeug unmöglich ist. Diese Variante hat den Nachteil des sehr komplizierten Aufbaus, der die Bedienung auch für Befugte wesentlich erschwert. Darüber hinaus stehen passende Normwerkzeuge erfahrungsgemäß nach einer gewissen Zeit auch für Unbefugte zur Verfügung.

Zu dieser Gruppe gehören auch Abreißschrauben, die zwar ein Fixieren ermöglichen, jedoch nach einem Abreißen des Antriebs sich nur noch mit Spezialwerkzeugen lösen lassen. Für Schrauben existieren Einwegschrauben mit einem Einwegantrieb, die sich zwar mit einem Standardwerkzeug fixieren, jedoch nur mit einem Spezialwerkzeug lösen lassen. Diese Varianten sind wiederum unhandlich und die Spezialwerkzeuge lassen sich ebenfalls für Unbefugte beschaffen.

Für die zuerst genannte Variante werden Schrauben, Muttern und dgl. verwendet, die eine Manipulation direkt anzeigen. Dazu kann beispielsweise eine Versiegelung mit Lack oder einem Aufkleber aufgebracht werden, die bei einem Lösen zerstört werden muss. Es können auch umgreifende Versiegelungselemente verwendet werden, die ebenfalls erst für ein Lösen zerstört werden müssen, wie es für Schraubverschlüsse von Getränkeflaschen bekannt ist. Diese Ausgestaltungen sind wiederum umständlich zu verwenden und andererseits sind die Versiegelungselemente nur einmalig verwendbar.

Aufgabe der vorliegenden Erfindung ist es daher, ein Verbindungssystem bereitzustellen, mit dem diese Nachteile zumindest teilweise überwunden werden. Insbesondere soll das Verbindungssystem auch mit Standardwerkzeugen bedienbar und ggf. unter Einsatz von Spezialwerkzeugen mehrfach verwendbar sein. Dabei sollen Manipulationen durch Unbefugte bevorzugt leicht erkennbar sein.

Diese Aufgabe wird gelöst durch ein Verbindungselement eines Verbindungssystems nach Anspruch :1 und ein Verfahren zum Versehen eines Verbindungssystems mit einer Verschlussversiegelung und/oder einer Momentenanzeige nach Anspruch 12. Weiterbildungen sind in den abhängigen Ansprüchen angegeben.

Die Erfinder haben erkannt, dass die Aufgabe in überraschender Weise konstruktiv besonders einfach dadurch gelöst werden kann, dass die Werkzeugangriffsfläche zumindest eine Schwächung aufweist, die beim Ausüben eines bestimmten Moments auf die Werkzeugangriffsfläche eine Verformung der Schwächung und/oder zumindest eines an die Schwächung angrenzenden Bereichs bewirkt, um so eine unbefugte Benutzung anzuzeigen oder eine befugte Benutzung mit ausreichend großem Moment anzuzeigen.

"Schwächung" meint im Rahmen der vorliegenden Erfindung eine gegenüber der üblichen Aufnahmemöglichkeit für durch ein Standard- oder Normwerkzeug aufgebrachte Kräfte schwächere Ausgestaltung in einer korrespondierenden Standard- bzw. Normwerkzeugangriffsfläche dergestalt, dass wenn durch das an die Standard- bzw. Normwerkzeugangriffsfläche angepasste Standard- bzw. Normwerkzeug Kräfte beim Öffnen und/oder Schließen des Verbindungssystems auf das Verbindungselement übertragen werden, aufgrund der Vorsehung der Schwächung eine zumindest teilweise Verformung bzw. Abscherung der Werkzeugangriffsfläche erfolgt, die eine unbefugte Manipulation bzw. eine genügend hohe Momentenanwendung sicher anzeigt.

Die erfindungsgemäße Werkzeugangriffsfläche ist somit von derzeit bestehenden Werkzeugangriffsflächen abgeleitet und weist bei Vorsehung der Schwächung als Materialausnehmung keine dieser derzeit bestehenden Werkzeugangriffsflächen auf, sie weicht also zumindest abschnittsweise von bekannten Werkzeugangriffsflächen ab.

Mit "bestimmten Moment" ist dabei entweder ein Moment ausreichender Größe gemeint, wodurch zum Beispiel bei sicherheitsrelevanten Anwendungen die Aufbringung solcher ausreichender Momente beim Fixieren der Verbindung nachgewiesen werden kann. Oder es ist mit "bestimmten Moment" eine von einer befugten Benutzung des Verbindungssystems abweichende Geometrie des Moments gemeint, das heißt, dass bei nicht vollumfänglichem Formschluss zwischen Werkzeugangriffsfläche und Werkzeugwirkungsfläche eine zumindest teilweise Verformung bzw. Abscherung der Werkzeugangriffsfläche erfolgt, wenn ein für das Lösen oder das oder Fixieren des Verbindungssystems erforderliches hohes Moment aufgebracht wird.

Die "bestimmten Momente" sind daher Momente mit für das Lösen oder Fixieren des Verbindungssystems grundsätzlich erforderlicher Größe (Verschlussversiegelung gegen unbefugte Benutzung) oder es sind Momente beim Fixieren, die eine für einen bestimmten Grad der Fixierung erforderliche Größe aufweisen (Momentenanzeige bei befugter Benutzung).

Unter "Verbindungssystem" sind nicht nur Systeme zum Verbinden von weiteren Elementen gemeint, wie es beispielsweise bei zwei Platten als weiteren Elementen der Fall ist, die von Schraube und Mutter als Verbindungselemente eines Verbindungssystems verbunden werden, sondern es können auch Verbindungen der zwei Verbindungselemente als solche vorliegen, wie es beispielsweise bei einer Verschlussschraube an einem Ölablass oder dergleichen.

Bei dem Verbindungssystem handelt es sich bevorzugt um ein Schraubverbindungssystem, bei dem Drehmomente zum Lösen bzw. Fixieren aufgewendet werden müssen.

Das erfindungsgemäße Verbindungselement eines Verbindungssystems, insbesondere Schraube oder Mutter, weist die Merkmale von Anspruch 1 auf.

In einer zweckmäßigen Weiterbildung ist vorgesehen, dass die Werkzeugangriffsfläche mehrere Bereiche aufweist, wobei zumindest ein Bereich, bevorzugt zumindest die Hälfte der Anzahl dieser Bereiche mit zumindest einer Schwächung versehen ist. In diesem Zusammenhang ist es sinnvoll, wenn die Schwächungen symmetrisch um die Werkzeugangriffsfläche verteilt sind, weil dadurch die gleichmäßige und zentrierte Benutzung des Werkzeugs ermöglicht wird.

Besonders gut sichtbar werden unbefugte Manipulationen, wenn die Schwächung am oder in der Nähe eines Abschnittes des Bereiches angeordnet ist, an dem beim bestimmungsgemäßen Gebrauch des Werkzeugs die Hauptkraft von dem Werkzeug auf die Werkzeugangriffsfläche übertragen wird. "Bestimmungsgemäßer Gebrauch" meint dabei die übliche Verwendung eines Werkzeugs, um ein Moment zu übertragen, und nicht davon abweichende Verwendungen, wie schlagende oder dgl. Wenn die Schwächung in Bezug auf die Symmetrie der Werkzeugangriffsfläche symmetrisch angeordnet ist, dann werden Manipulationen sowohl beim Öffnen als auch beim Fixieren sichtbar gemacht.

Wenn dagegen die Schwächung in Bezug auf die Symmetrie der Werkzeugangriffsfläche asymmetrisch angeordnet ist, können damit unbefugte Manipulationen entweder beim Öffnen oder beim Fixieren sichtbar gemacht werden.

Dabei kann die asymmetrische Anordnung aber nicht nur zur Sichtbarmachung unbefugter Manipulationen ("Garantiesiegel") dienen, sondern auch als "Momentensiegel", also zum Nachweis eines ausreichend hohen Drehmoments beim Fixieren dienen, wie es beispielsweise bei Radmuttern für einen sicheren Betrieb eines KFZ erforderlich ist. Dann ist die Schwächung so vorgegeben, dass eine Verformung ab einer vorher festgelegten Größe des Drehmoment erfolgt. Diese Vorgabe kann durch Einstellung einer oder mehrerer Parameter aus der Gruppe Anzahl der Schwächungen, Form und Dimension der Schwächung, Verwendung verschiedener Arten von Schwächungen und Dimension des Bereichs, an dem beim bestimmungsgemäßen Gebrauch des Werkzeugs die Hauptkraft von dem Werkzeug auf die Werkzeugangriffsfläche übertragen wird, realisiert werden.

Eine Einstellung dieser Parameter kann natürlich auch bei symmetrisch angeordneten Schwächungen verwendet werden. Und diese Einstellung kann nicht nur beim Momentensiegel, sondern auch beim Garantiesiegel verwendet werden.

Erfindungsgemäß ist die Werkzeugangriffsfläche als Einfachschlitz, Kreuzschlitz, Außenmehrkant, Innenmehrkant, Außenvielzahn, Innenvielzahn, Ribe, Torx®, Tri-Wing, Torq-Set, Torx®-Tamper oder Pentalob ausgebildet. Es ist aber auch jede andere gebräuchliche Normwerkzeugangriffsfläche verwendbar. Beispielsweise können anstelle einer Torx® (6-rund)-Normwerkzeugangriffsfläche auch andere Mehrfachrund-Normwerkzeugangriffsflächen Verwendung finden.

Besonders bevorzugt ist die Schwächung als Materialausnehmung und/oder als Materialveränderung ausgebildet.

Eine Materialausnehmung in Bezug auf die Normwerkzeugangriffsfläche kann dabei in Bezug auf einen bestimmten Bereich der Normwerkzeugangriffsfläche als eine einheitliche Ausnehmung oder als mehrere Ausnehmungen wie Schlitzung oder dgl. vorgesehen sein, es handelt sich also um eine bestimmte Formveränderung gegenüber einer Normwerkzeugangriffsfläche.

Materialveränderungen können beispielsweise in Form von Füllungen solcher Materialausnehmungen mit zum Beispiel Kunststoff erfolgen, oder durch Vorsehen einer Porosität oder dgl., so dass insgesamt die Normwerkzeugangriffsfläche nicht verändern worden ist, jedoch das Material gegenüber einer Krafteinwirkung eines Normwerkzeugs in der Schwächung nicht so fest ist wie das umgebende Material. Dies hat den Vorteil, dass Unbefugte die Schwächung dem Verbindungselement nicht unmittelbar ansehen können. Bei der Materialveränderung wird also ein weniger stabiles Material als das umgebende Material verwendet.

Durch eine unbefugte Benutzung bewirkte Verformungen können optisch unmittelbar mit dem Auge erkannt werden oder für nur geringfügige Verformungen werden geeignete Lehren zur Feststellung verwendet.

Wenn es sich bei der Schwächung um eine Materialveränderung handelt, dann kann eine unbefugte Benutzung des Verbindungssystems durch den Fachmann mit einem Werkzeug überprüft werden, dass eine zur Werkzeugangriffsfläche korrespondierend ausgebildete Werkzeugwirkungsfläche aufweist. Diese Werkzeugwirkungsfläche wird dabei als Lehre verwendet, um festzustellen, ob eine unbefugte Benutzung stattgefunden hat. Dies wird dadurch festgestellt, dass aufgrund der unbefugten Benutzung eine Verformung im Bereich der Schwächung stattfand, was die Werkzeugwirkungsfläche als Lehre direkt zeigt. Bei der Werkzeugangriffsfläche und demzufolge der Werkzeugwirkungsfläche kann es sich in diesem Fall der Materialveränderung um Normflächen, beispielsweise in Form derzeit gebräuchlicher Antriebe handeln.

Die Schwächung sollte vorteilhaft in Bezug auf eine Länge (beispielsweise eine Kantenlänge) der Werkzeugangriffsfläche eine solche Erstreckung aufweisen, dass das Verhältnis der Erstreckung zur Länge im Bereich 0,1 bis 0,9, bevorzugt im Bereich 0,2 bis 0,6, insbesondere im Bereich 0,25 bis 0,5 liegt.

Vorteilhaft ist die Länge der Schwächung über der Werkzeugangriffsfläche zumindest gleich der Länge des benachbarten Bereichs der Werkzeugangriffsfläche, weil dann ein Kippen der Werkzeugwirkungsfläche um einen Punkt der Werkzeugangriffsfläche erfolgt und in diesem Bereich keine Verformung der Werkzeugangriffsfläche bewirkt wird. Dann sollte die als Ausnehmung ausgebildete Schwächung eine solche Form aufweisen, dass in der Ausnehmung eine Abscherung oder Verformung durch die Werkzeugwirkungsfläche erfolgt. Beispielsweise würde man bei einem Innensechskant eine gerundete Ausnehmung vorsehen, weil dann die eckig ausgebildete Werkzeugwirkungsfläche eine Verformung dieser Rundung bewirkt.

Erfindungsgemäß sind zwei verschiedene Arten von Schwächungen vorgesehen. Dann kann zum einen eine Anpassung an geringe Anzugsmomente beim Lösen und Fixieren von kleineren Verbindungselementen erfolgen. Andererseits, kann die Sichtbarmachung unbefugter Benutzung bzw. ausreichender Momente besonders leicht ermöglicht werden. Dazu ist die eine erste Art Schwächung so ausgebildet, dass sie für die Werkzeugwirkungsfläche beim Lösen und/oder Fixieren eine Ausnehmung darstellt, in die die Werkzeugwirkungsfläche beim Lösen und/oder Fixieren eintaucht, während die zweite Art Schwächung so ausgebildet ist, dass sie einen Widerstand für das Eindringen der Werkzeugwirkungsfläche in die durch die erste Art Schwächung bereitgestellte Ausnehmung beim Lösen bzw. Fixieren bereitstellt. Beim Lösen bzw. Fixieren der Verbindung wird dann dieser Widerstand überwunden, wodurch eine Verformung der zweiten Art von Schwächung erfolgt, wodurch die die Sichtbarmachung unbefugter Benutzung bzw. ausreichender Momente erfolgt.

Besonders bevorzugt ist die zweite Art von Schwächung als eine Hinterschneidung ausgebildet, so dass der Widerstand durch einen Vorsprung gebildet wird, der eine Sollbruch- bzw. -verformungsstelle darstellt.

Diese beiden Arten von Schwächungen können allerdings auch unabhängig voneinander vorteilhaft eingesetzt werden.

Anstelle von Ausnehmungen können auch in diesem Fall wiederum Materialveränderungen vorgesehen sein, wobei dann die erste Art Schwächung eine solche Materialveränderung aufweist, die im Vergleich zur zweiten Art Schwächung einen geringeren Widerstand bereitstellt.

Die erste Art Schwächung stellt somit der Werkzeugangriffsfläche beim Lösen bzw. Fixieren einen ersten Widerstand bereit und die zweite Art Schwächung stellt der Werkzeugangriffsfläche beim Lösen bzw. Fixieren einen zweiten Widerstand bereit, wobei die Summe der ersten Widerstände geringer ist als die Summe der zweiten Widerstände.

Schließlich wird selbständiger Schutz beansprucht für das erfindungsgemäße Verfahren zum Versehen eines Verbindungssystems mit einer Verschlussversiegelung und/oder einer Momentenanzeige, wobei das Verfahren die Merkmale von Anspruch 12 aufweist.

Vorteilhaft wird in diesem Verfahren das erfindungsgemäße Verbindungselement verwendet .

Im Rahmen der vorliegenden Erfindung können Merkmale des Verbindungselements und/oder des Werkzeugs als Merkmale des Verfahrens eingesetzt werden und Merkmale des Verfahrens können auch als Merkmale des Verbindungselementes und/oder des Werkzeugs verwendet werden, wenn nichts anderes angegeben ist. Außerdem können, soweit nichts anderes angegeben ist, sämtliche Merkmale beliebig miteinander kombiniert werden.

Die Kennzeichen und Merkmale sowie weitere Vorteile der vorliegenden Erfindung werden im Folgenden im Rahmen der Beschreibung bevorzugter Ausführungsbeispiele im Zusammenhang mit den Figuren deutlich werden. Nur Figuren 14-19 zeigen Ausführungsformen der Erfindung. Dabei zeigen rein schematisch:
- Fig. 1a, 1b: eine erste bevorzugte Ausgestaltung des eines Verbindungselements,
- Fig. 2a, 2b: eine erste bevorzugte Ausgestaltung des Werkzeugs und die Kombination dieses Werkzeugs mit dem Verbindungselement nach Fig. 1a, 1b,
- Fig. 3a, 3b: ein erstes Normwerkzeug und die Kombination des Verbindungselements nach Fig. 1a, 1b mit dem ersten Normwerkzeug,
- Fig. 4a, 4b: ein zweites Normwerkzeug und die Kombination des Verbindungselements nach Fig. 1a, 1b mit dem zweiten Normwerkzeug,
- Fig. 5a, 5b: eine zweite bevorzugte Ausgestaltung des Verbindungselements,
- Fig. 6a, 6b: eine zweite bevorzugte Ausgestaltung des Werkzeugs,
- Fig. 7a, 7b: eine dritte bevorzugte Ausgestaltung des Verbindungselements,
- Fig. 8a, 8b: eine vierte bevorzugte Ausgestaltung des Verbindungselements,
- Fig. 9a, 9b: eine fünfte bevorzugte Ausgestaltung des Verbindungselements,
- Fig. 10: die Kombination des Verbindungselements nach Fig. 9a, 9b mit einem dritten Normwerkzeug,
- Fig. 11a, 11b: eine sechste bevorzugte Ausgestaltung des Verbindungselements,
- Fig. 12: die Kombination des Verbindungselements nach Fig. 10a, 10b mit dem dritten Normwerkzeug,
- Fig. 13a, 13b: eine siebente bevorzugte Ausgestaltung des Verbindungselements,
- Fig. 14: eine achte bevorzugte Ausgestaltung des erfindungsgemäßen Verbindungselements,
- Fig. 15, 16: eine neunte bevorzugte Ausgestaltung des erfindungsgemäßen Verbindungselements,
- Fig. 17a, 17b, 17c: eine zehnte bevorzugte Ausgestaltung des erfindungsgemäßen Verbindungselements,
- Fig. 18: eine elfte bevorzugte Ausgestaltung des erfindungsgemäßen Verbindungselements und
- Fig. 19: eine zwölfte bevorzugte Ausgestaltung des erfindungsgemäßen Verbindungselements.

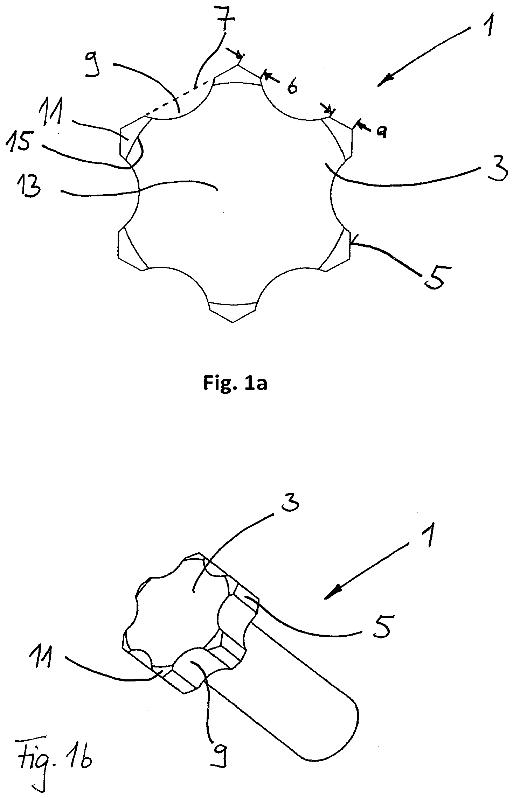

In den Fig. 1a, 1b, 5a, 5b, 7a, 7b, 8a, 8b, 9a, 9b, 11a, 11b, 13a, 13b und 14 bis 19 sind rein schematisch Verbindungselemente gezeigt, wobei die Fig. 1a, 5a, 7a, 8a, 9a, 11a, 13a und 14 bis 19 jeweils Draufsichten auf den Antrieb zeigen und die Fig. 1b, 5b, 7b, 8b, 9b, 11b und 13b die zugehörigen perspektivischen Ansichten.

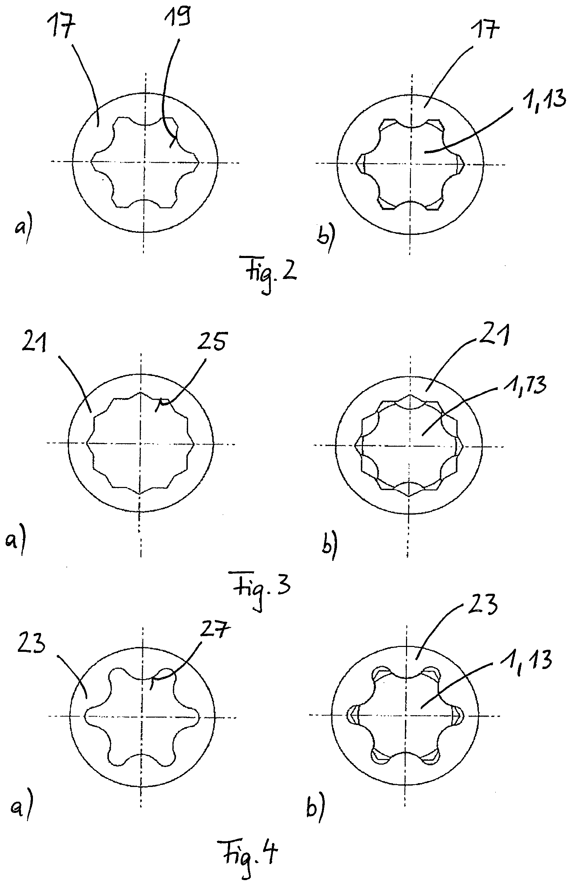

In den Fig. 3, 4, 10 und 12 sind jeweils Kombinationen von Verbindungselementen mit Werkzeugen gezeigt und zwar im eingesteckten Zustand der Werkzeuge in die jeweiligen Verbindungselemente.

In den Fig. 1a, 1b ist ein erstes Verbindungselement in Form einer Schraube 1 gezeigt, deren Antrieb 3 eine Werkzeugangriffsfläche 5 aufweist, die als Sechskant ausgebildet ist und in jeder der sechs Kanten 7 eine Schwächung in Form einer kreissegmentförmigen Materialausnehmung 9 aufweist. Diese Materialausnehmung 9 weist in Bezug auf die Kantenlänge a eine Erstreckung b von ca. 0,5 auf, d.h. b/a ist etwa 0,5. Dadurch bilden sich singuläre Spitzen 11 aus, die bei Benutzung des Antriebs 3 mit einem Sechskant-Montageschlüssel gegenüber dem Antriebsgrundkörper 13 auf Abscherung entlang einer Abscherungslinie 15 belastet werden.

Die Dimension der als Materialausnehmungen 9 gebildeten Schwächungen und damit die Dimension der Spitzen 11 ist dabei so gewählt, dass die für ein Lösen oder Fixieren einer mit der Schraube 1 vorgenommen Verbindung erforderlichen Drehmomente zu einer Verformung bzw. Abscherung im Bereich der Spitzen 11 bzw. des Übergangs zwischen Spitzen 11 und Ausnehmungen 9 führen, wenn mit einem Sechskant-Montageschlüssel gearbeitet wird und nicht mit einem Montageschlüssel, dessen Werkzeugwirkungsfläche entlang der Werkzeugangriffsfläche einen vollflächigen Formschluss bereitstellt.

Ein in Fig. 2a in Draufsicht gezeigtes Werkzeug 17 zur befugten Benutzung dieses Verbindungselements 1 weist eine Werkzeugwirkungsfläche 19 auf, die exakt mit der mit den Materialausnehmungen 9 versehenen Werkzeugangriffsfläche 5 korrespondiert. D.h. dass bei Betätigung des Antriebs 3 mit dem Werkzeug 17 sich ein vollflächiger formschlüssiger Kontakt zwischen Werkzeugwirkungsfläche 19 und Werkzeugangriffsfläche 5 ausbildet, so dass keine Abscherung der Spitzen 11 erfolgen kann. Bei einer solchen befugten Benutzung wird also keine Verformung des Antriebs stattfinden (vgl. Fig. 2b).

Wenn stattdessen eines der in Fig. 3a, 4a in Draufsicht gezeigten Normwerkzeuge 21, 23 verwendet wird, wobei Fig. 3a einen Vielzahn-Montageschlüssel 21 und Fig. 4a einen Torx-Montageschlüssel zeigt, dann besteht mit dem Antrieb 3 der Schraube 1 nach Fig. 1a, 1b kein vollflächiger Formschluss mit den jeweiligen Werkzeugwirkungsflächen 25, 27, so dass im Fall des Vielzahn-Montageschlüssels 21 eine Abscherung der Spitzen 11 und bei Verwendung des Torx-Montageschlüssels 23 eine Verformung der Spitzen 11 erfolgen wird. Der Effekt der Abscherung würde beispielsweise auch bei Verwendung eines Sechskantschlüssels (auch Nuss genannt, nicht gezeigt) zu beobachten sein.

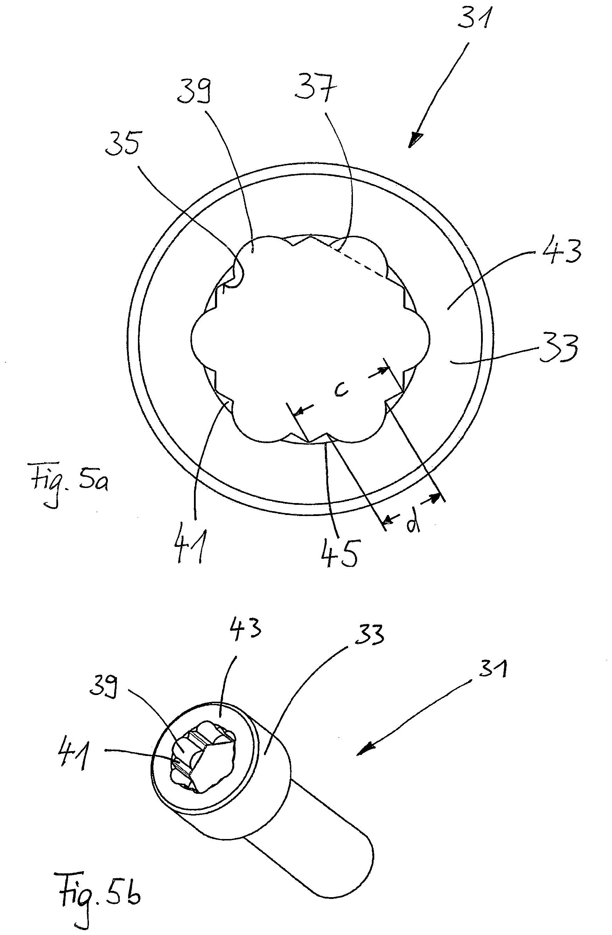

In den Fig. 5a, 5b ist ein zweites Verbindungselement in Form einer Schraube 31 gezeigt, deren Antrieb 33 eine Werkzeugangriffsfläche 35 aufweist, die als Innen-Sechskant ausgebildet ist und in jeder der sechs Kanten 37 eine Schwächung in Form einer kreissegmentförmigen Materialausnehmung 39 aufweist. Diese Materialausnehmung 39 weist in Bezug auf die Kantenlänge c eine Erstreckung d von ca. 0,5 auf, d.h. d/c ist etwa 0,5. Dadurch bilden sich singuläre Doppelspitzen 41 aus, die bei Benutzung des Antriebs 33 mit einem Sechskant gegenüber dem Antriebsgrundkörper 43 auf Abscherung 45 belastet werden.

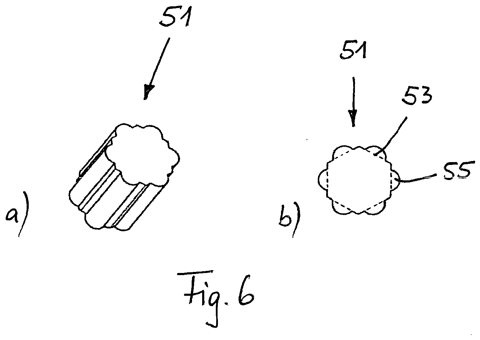

Um eine solche Verformung zu verhindern, wird für eine befugte Benutzung des Antriebs 33 ein formschlüssiger Spezialschlüssel 51 verwendet, der gegenüber einem Sechskant 53 den Materialausnehmungen 39 korrespondierende kreissegmentförmige Auskragungen 55 aufweist, wie in Fig. 6a in einer perspektivischen Ansicht und in Fig. 6b in einer Draufsicht zu erkennen ist.

Die vorbeschriebenen Verbindungselemente 1, 31 weisen in Bezug auf die Werkzeugangriffsflächen 5, 35 symmetrisch eingebrachte Materialausnehmungen 9, 39 auf. Dadurch würden Verformungen des Antriebs 5, 35 bei jeder unbefugten Benutzung, d.h. sowohl beim Lösen als auch beim Fixieren des Verbindungselements 1, 31 entstehen.

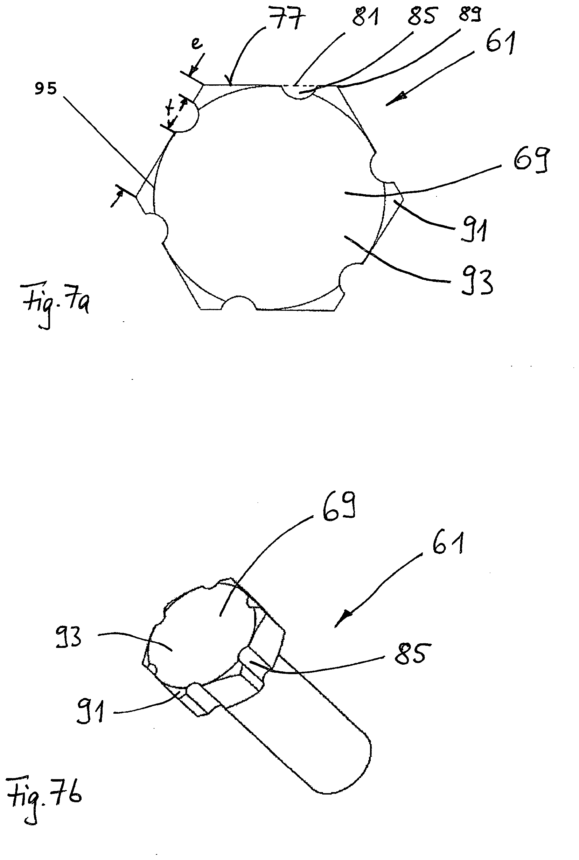

In den Fig. 7a, 7b, 8a, 8b, 9a, 9b, 11a und 11b sind jeweils dritte, vierte, fünfte und sechste bevorzugte Ausgestaltungen des Verbindungselements 61, 63, 65, 67 in Draufsicht auf den jeweiligen Antrieb 69, 71, 73, 75 bzw. in perspektivischer Ansicht gezeigt.

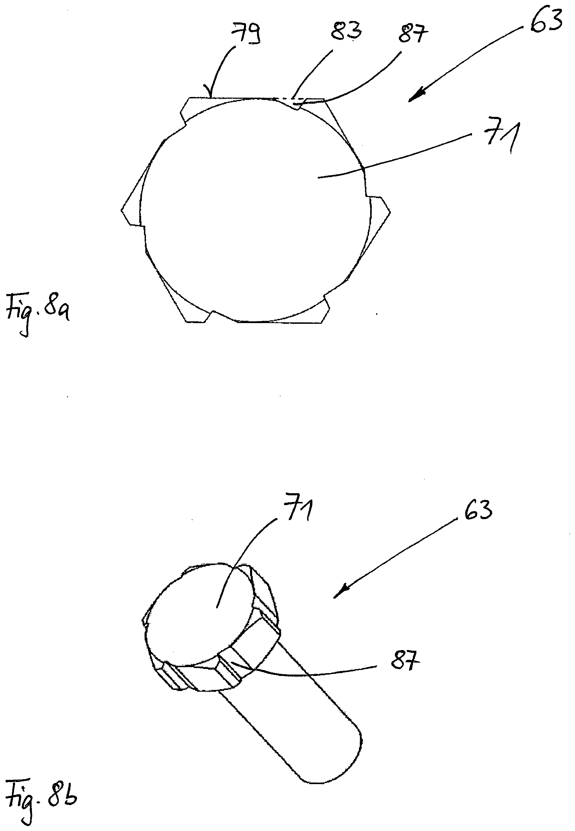

Dabei handelt es sich bei den in Fig. 7a, 7b, 8a und 8b gezeigten Schrauben 61, 63 um solche, deren Antrieb 69, 71 eine Werkzeugangriffsfläche 77, 79 aufweist, die als Außen-Sechskant ausgebildet ist und in jeder der sechs Kanten 81, 83 eine Schwächung in Form einer Materialausnehmung 85, 87 aufweist.

Die Schraube 61 weist eine halbkreisförmige Materialausnehmungen 85 auf, die in Uhrzeigersinn von der Mitte der Kante 81 zu einer Ecke 89 hin verschoben eingebracht sind. In Bezug auf die Kantenlänge e weist die Materialausnehmung 85 eine Erstreckung f von ca. 0,25 auf, d.h. f/e ist etwa 0,25. Dadurch bilden sich asymmetrisch geformte Spitzen 91 aus, die bei Benutzung des Antriebs 69 entgegen dem Uhrzeigersinn mit einem Sechskantschlüssel gegenüber dem Antriebsgrundkörper 93 auf Abscherung 95 belastet werden, hingegen bei Benutzung des Antriebs 69 im Uhrzeigersinn mit einem Sechskantschlüssel gegenüber dem Antriebsgrundkörper 93 nicht verformt werden. Dies hängt damit zusammen, dass bei einer Benutzung entgegen dem Uhrzeigersinn Material der Spitze 91 in die Materialausnehmung 85 gedrückt und die Spitze 91 dadurch verrundet wird.

Die Schraube 63 nach Fig. 8a, 8b unterscheidet sich von der vorbeschriebenen Schraube 61 nach Fig. 7a, 7b nur dadurch, dass die Materialausnehmungen 87 nicht halbkreisförmig 85 sondern winklig eingebracht sind. Die Wirkungen in Bezug auf eine unbefugte Benutzung sind die gleichen wie für die Schraube 61 beschrieben.

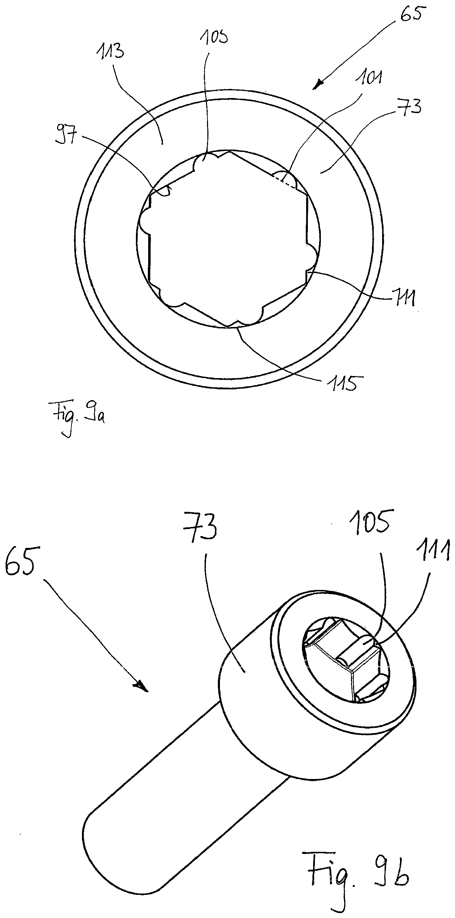

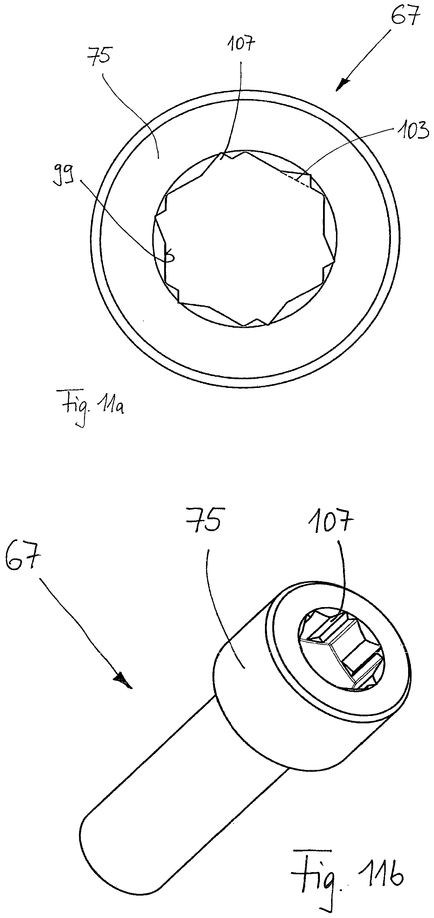

Bei den in Fig. 9a, 9b, 11a und 11b gezeigten Schrauben 65, 67 handelt es sich um solche, deren Antrieb 73, 75 eine Werkzeugangriffsfläche 97, 99 aufweist, die als Innen-Sechskant ausgebildet ist und in jeder der sechs Kanten 101, 103 eine Schwächung in Form einer Materialausnehmung 105, 107 aufweist.

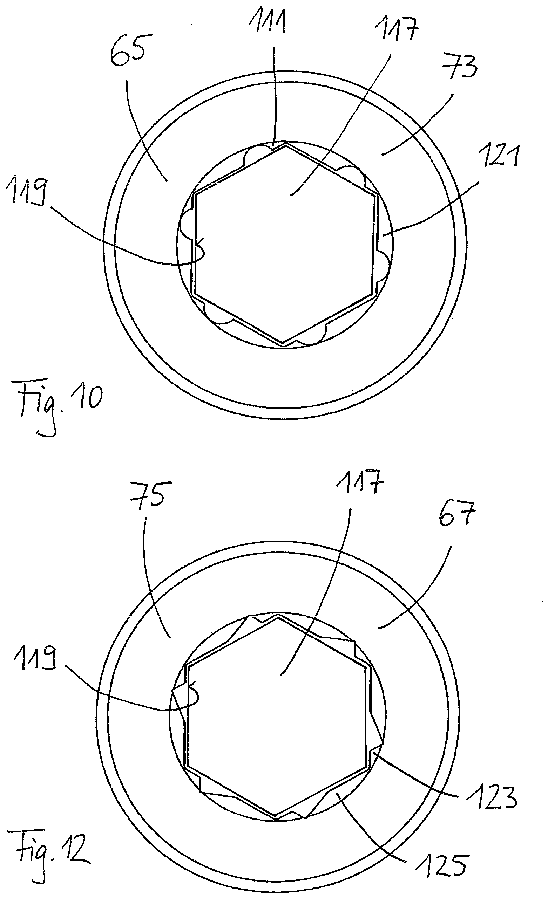

Die Schraube 65 weist halbkreisförmige Materialausnehmungen 105 auf, die in Uhrzeigersinn von der Mitte der Kante 101 zu einer Ecke 109 hin verschoben eingebracht sind. In Bezug auf die Kantenlänge g weist jede Materialausnehmung 105 eine Erstreckung h von ca. 0,25 auf, d.h. h/g ist etwa 0,25. Dadurch bilden sich asymmetrisch geformte Spitzen 111 aus, die bei Benutzung des Antriebs 73 entgegen dem Uhrzeigersinn mit einem Sechskant (vgl. Fig. 10) gegenüber dem Antriebsgrundkörper 113 auf Abscherung 115 belastet werden, hingegen bei Benutzung des Antriebs 73 im Uhrzeigersinn mit einem Sechskant gegenüber dem Antriebsgrundkörper 113 nicht verformt werden. Dies hängt damit zusammen, dass bei einer Benutzung entgegen dem Uhrzeigersinn Material der Spitze 111 in die Materialausnehmung 105 gedrückt und die Spitze 111 dadurch verrundet wird.

Wenn, wie in Fig. 10 in Draufsicht gezeigt, das als Sechskantschlüssel 117 ausgebildete Normwerkzeug zur Benutzung des Antriebs 73 verwendet wird, dann besteht mit dem Antrieb 73 der Schraube 65 nach Fig. 9a, 9b kein vollflächiger Formschluss mit der Werkzeugwirkungsfläche 119, so dass eine Abscherung bzw. Abrundung der Spitzen 111 erfolgen wird, wenn der Antrieb 73 entgegen dem Uhrzeigersinn gedreht wird. Wenn dagegen eine Drehung mit dem Uhrzeigersinn erfolgt, dann besteht in den Bereichen 121 genügend Kontakt zwischen Werkzeugwirkungsfläche 119 und Antrieb 73, so dass keine Verformung erfolgt.

Die Schraube 67 nach Fig. 11a, 11b unterscheidet sich von der vorbeschriebenen Schraube 65 nach Fig. 9a, 9b nur dadurch, dass die Materialausnehmungen 107 nicht halbkreisförmig 105 sondern winklig eingebracht sind. Die Wirkungen in Bezug auf eine unbefugte Benutzung (vgl. Fig. 12) sind dieselben wie für die Schraube 65 beschrieben.

Wenn also, wie in Fig. 12 in Draufsicht gezeigt, das als Sechskantschlüssel 117 ausgebildete Normwerkzeug zur Benutzung des Antriebs 75 verwendet wird, dann besteht mit dem Antrieb 75 der Schraube 67 nach Fig. 11a, 11b kein vollflächiger Formschluss mit der Werkzeugwirkungsfläche 119, so dass eine Abscherung bzw. Abrundung der Spitzen 123 erfolgen wird, wenn der Antrieb 75 entgegen dem Uhrzeigersinn gedreht wird. Wenn dagegen eine Drehung mit dem Uhrzeigersinn erfolgt, dann besteht in den Bereichen 125 genügend Kontakt zwischen Werkzeugwirkungsfläche 119 und Antrieb 75, so dass keine Verformung erfolgt.

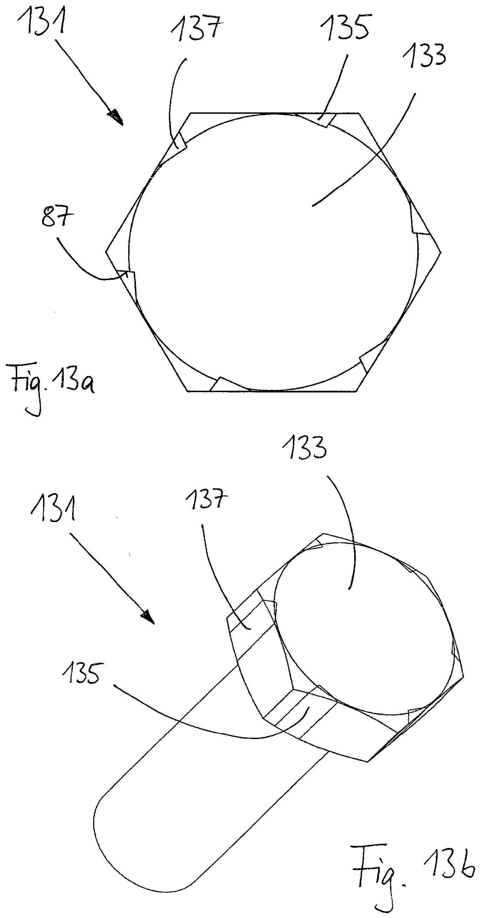

In Fig. 13a, 13b ist eine siebente bevorzugte Ausgestaltung des Verbindungselements 131 in Draufsicht bzw. perspektivischer Ansicht gezeigt. Es ist zu erkennen, dass es sich um eine Schraube 131 mit einem Antrieb 133 in Form eines Außensechskants handelt. Hier sind die Schwächungen 135 dadurch erzeugt, dass die Materialausnehmungen 87 der Schraube 63 aus den Fig. 8a, 8b nachträglich wieder mit einem Material 137 aufgefüllt wurden, das eine wesentlich geringere Härte aufweist, als das umgebende Material der Schraube 131. Beispielsweise handelt es sich bei dem Material der Schwächung 137 um einen Kunststoff und bei dem übrigen Material um Edelstahl. Dann sind bei einer unbefugten Benutzung dieselben Wirkungen zu beobachten, wie dies für die Schraube 63 nach den Fig. 8a, 8b schon beschrieben wurde.

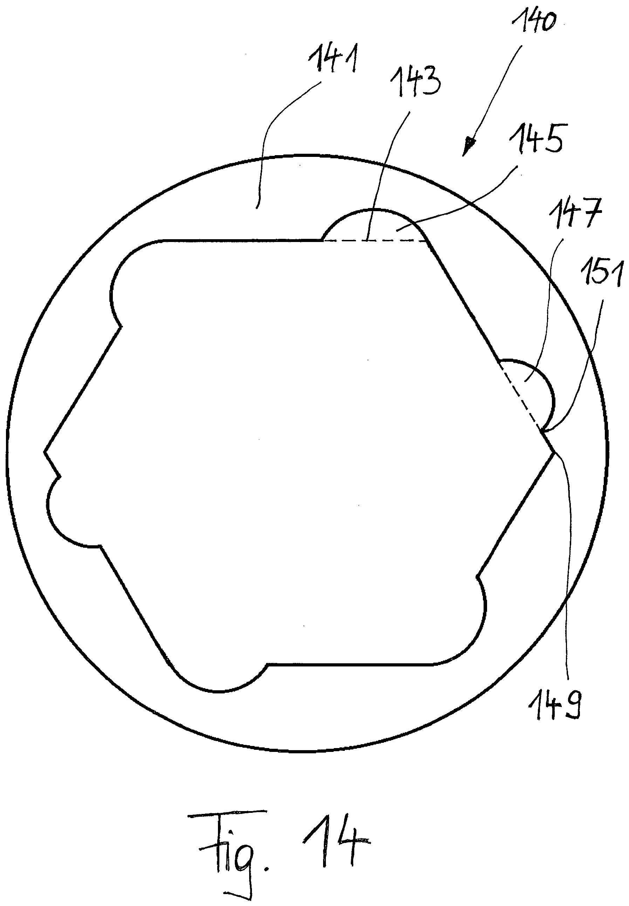

In Fig. 14 ist eine achte bevorzugte Ausgestaltung des erfindungsgemäßen Verbindungselements 140 in Draufsicht gezeigt. Es ist zu erkennen, dass es sich um eine Schraube 140 mit einem Antrieb 141 in Form eines Innensechskants handelt. Hier liegen in Bezug auf die Kanten 143 zwei unterschiedliche Arten von Schwächungen 145, 147 vor, nämlich eine erste Art von Schwächungen 145, die direkt an einer Ecke des Innensechskants angeordnet ist, und eine zweite Art Schwächung 147, die beabstandet von den Ecken des Innensechskants angeordnet ist, wobei sie allerdings nicht mittig zwischen zwei Ecken, sondern etwas näher zu einer Ecke 149 hin angeordnet ist.

Diese besondere Ausgestaltung mit zwei unterschiedlich ausgebildeten Arten von Schwächungen 145, 147 wird gewählt, wenn bei kleineren Verbindungselementen 140 nur geringe Anzugsmomente eingesetzt werden können, da ansonsten eine Beschädigung des Verbindungselements 140 zu befürchten ist. Dann tritt die Materialverformung bei unbefugter Benutzung an der Spitze 151 auf. Damit diese Materialverformung auch bei geringen Anzugsmomenten sicher auftritt, wurden weniger, nämlich bevorzugt zwei Materialausnehmungen 147 zweiter Art und mehr, nämlich bevorzugt vier Materialausnehmungen 145 erster Art verwendet. Man könnte natürlich auch mehr oder weniger Materialausnehmungen 147 zweiter Art verwenden, je nachdem welche Anzugsmomente das Verbindungselement 140 verträgt.

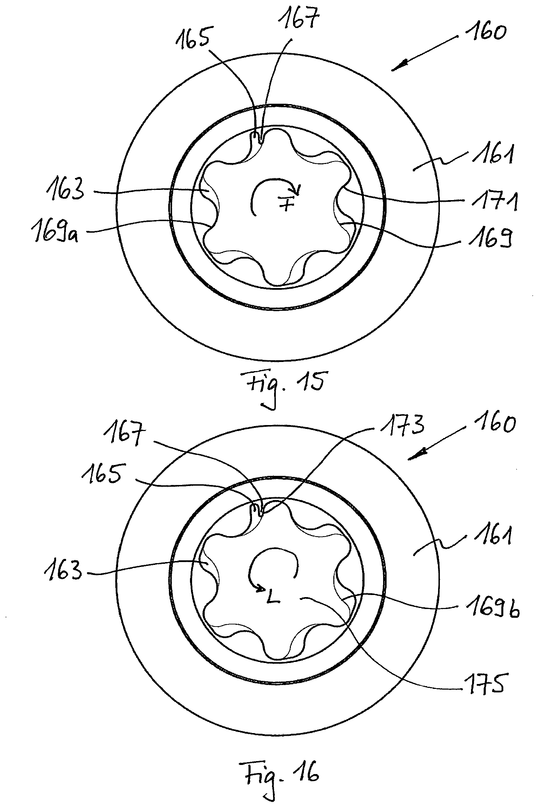

In Fig. 15 und 16 ist eine neunte bevorzugte Ausgestaltung des erfindungsgemäßen Verbindungselements 160 in Draufsicht gezeigt. Es ist zu erkennen, dass es sich um eine Schraube 160 mit einem Torx-Antrieb 161 handelt. Hier liegen ebenfalls zwei unterschiedliche Arten von Schwächungen 163, 165 vor, nämlich eine erste Art von Schwächung 163, die direkt angrenzend an eine Ecke der Torx-Werkzeugangriffsfläche 171 angeordnet ist, und eine zweite Art von Schwächung 165, die als Hinterschneidung in Bezug auf die Werkzeugangriffsfläche 171 ausgebildet ist, so dass sich ein Vorsprung 167 ergibt, der die Werkzeugwirkungsfläche 169 umfasst. In Fig. 15 ist zu erkennen, dass in Fixierungsrichtung F die Werkzeugwirkungsfläche 169 mit seinen die Hauptkraft übertragenden Abschnitten 169a vollständig an der Werkzeugangriffsfläche 171 des Antriebs 161 anliegt. So kann die maximale Kraft bei der Fixierung übertragen werden.

In Fig. 16 ist zu erkennen, dass in Lösungsrichtung L die Werkzeugwirkungsfläche 169 mit seinen die Hauptkraft übertragenden Abschnitten 169b fast überall in die Ausnehmungen der Schwächungen erster Art 163 eintaucht, jedoch an der Fläche 173 des Vorsprungs 167 teilweise anliegt. Aufgrund der Hinterschneidung 165 bildet der Vorsprung 167 eine Sollbruchstelle bzw. Sollverformungsstelle. Beim Aufwenden einer für das Lösen des Verbindungselements 160 notwendigen Kraft in Löserichtung L wird ersichtlich der Vorsprung 167 durch die Werkzeugwirkungsfläche 169 abgeschert, bis die die Hauptkraft übertragenden Abschnitte 169b vollständig in die Ausnehmungen 163 eingetaucht sind bzw. die Abscherungs- und Verformungskräfte auf den Vorsprung 167 größer sind als die durch das Lösen angewandten Kräfte. Beim Lösen will somit das Werkzeug 175 in die Ausnehmungen der Schwächungen 163 erster Art eintauchen und wird nur von dem einen Widerstand bildenden Vorsprung 167 davon abgehalten, der jedoch aufgrund der beim Lösen aufgewandten Kräfte abgeschert oder zumindest verformt wird. Die genaue Wirkung kann durch die Länge und Breite des Vorsprungs 167 und die Anzahl solcher Vorsprünge 167 bestimmt werden.

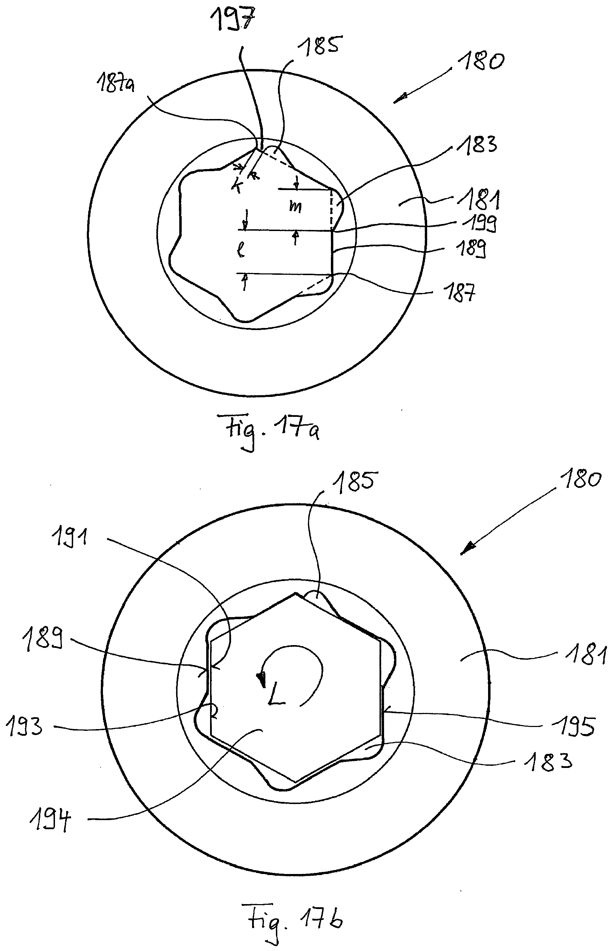

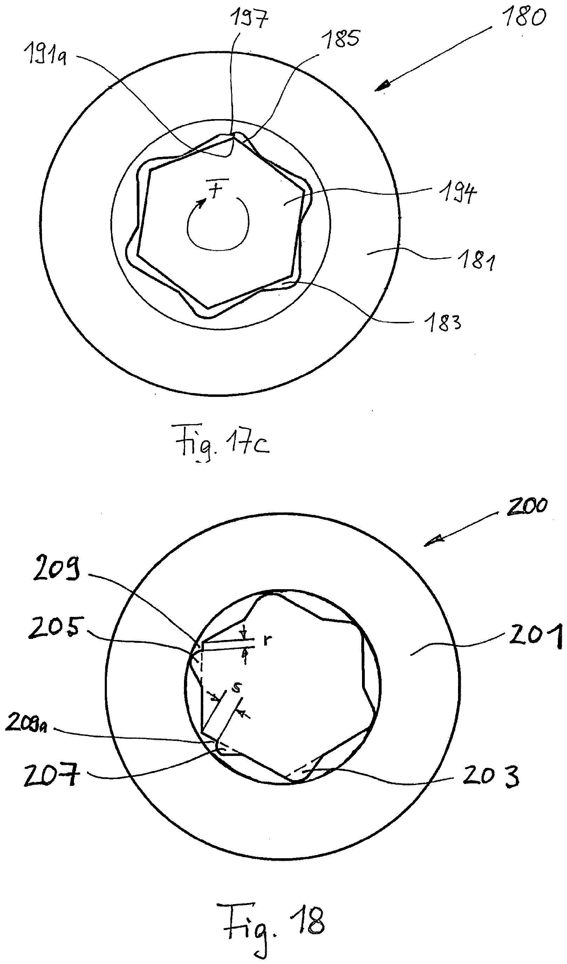

In Fig. 17a, 17b und 17c ist eine zehnte bevorzugte Ausgestaltung des erfindungsgemäßen Verbindungselements 180 in Draufsicht gezeigt. Es ist zu erkennen, dass es sich um eine Schraube 180 mit einem Innensechskant-Antrieb 181 handelt. Hier liegen ebenfalls zwei unterschiedliche Arten von Schwächungen 183, 185 vor, nämlich eine erste Art von Schwächung 183, die als Ausnehmung direkt angrenzend an eine Ecke 187 der Innensechskant-Werkzeugangriffsfläche 189 angeordnet ist, und eine zweite Art von Schwächung 185, die als von der Ecke 187a um den Abstand k beabstandet angeordnete Ausnehmung ausgebildet ist.

In Fig. 17b ist zu erkennen, dass beim Lösen L die Bereiche 191 der Werkzeugwirkungsfläche 193 des Werkzeugs 194, die die Hauptkraft übertragen, vollflächig an den Bereichen 195 der Werkzeugangriffsfläche 189 anliegen, so dass die zum Lösen notwendige Kraft übertragen werden kann und keine Verformung erfolgt.

In Fig. 17c ist zu erkennen, dass beim Fixieren F von den Bereichen der Werkzeugwirkungsfläche 193, die die Hauptkraft übertragen, nur der Bereich 191a an dem Vorsprung 197 anliegt. Aufgrund der Ausnehmung 185 bildet der Vorsprung 197 eine Sollbruchstelle bzw. Sollverformungsstelle. Beim Aufwenden einer für das Fixieren des Verbindungselements 180 notwendigen Kraft in Fixierungsrichtung F wird ersichtlich der Vorsprung 197 dann abgeschert, wenn die durch das aufgewandte Moment ausgeübte Kraft auf den Vorsprung 197 größer ist, als dessen Abscher- bzw. Verformungskraft. Wenn diese Abscher- bzw. Verformungskraft so eingestellt ist, dass ein gewünschtes Moment aufgebracht werden muss, um die Abscherung bzw. Verformung zu bewirken, dann liegt im Sinne eines Momentensiegels die Anzeige eines ausreichend hoch aufgebrachten Moments vor. Die Einstellung des gewünschten Moments kann wiederum durch die Länge und Breite des Vorsprungs 197 sowie die Form der Ausnehmung 185 und die Anzahl solcher Vorsprünge 197 bestimmt werden.

Damit ausschließlich eine Abscherung bzw. Verformung des Vorsprungs 197 stattfindet und keine Verformung der übrigen Werkzeugangriffsfläche 189 wurde die Länge m der Schwächung 183 erster Art auf der Werkzeugangriffsfläche 189 genau so lang wie die Länge I des benachbarten Bereichs der Werkzeugangriffsfläche 189 gewählt. Es findet somit beim Fixieren ein Klappen der Werkzeugwirkungsfläche 193 gegenüber Punkt 199 statt. Die Länge m kann hierzu auch länger gewählt werden.

In diesem Beispiel ist die erste Schwächung 183 als Rundung ausgebildet. Dadurch weist sie eine solche Form auf, dass in der Ausnehmung 183 eine Abscherung oder Verformung durch die Werkzeugwirkungsfläche 193 erfolgt (in Fig. 17c nicht gezeigt). Es erfolgt also sowohl eine Verformung bzw. Abscherung des Vorsprungs 197 als auch eine Verformung der Ausnehmung 183. Wenn man letzteres vermeiden wollte, würde man diese Ausnehmung 183 korrespondierend zur Werkzeugwirkungsfläche 193 ausbilden, so dass im Umgeklappten Zustand die Werkzeugwirkungsfläche 193 plan an der Ausnehmung 183 anliegt.

In Fig. 18 ist eine elfte bevorzugte Ausgestaltung des erfindungsgemäßen Verbindungselements 200 in Draufsicht gezeigt. Es ist zu erkennen, dass es sich im Wesentlichen um einen Antrieb 201 mit einer invertierte Ausführung im Vergleich zum Verbindungselement 180 handelt. Dadurch erfolgt die Abscherung bzw. Verformung des durch die Schwächung 205 zweiter Art gebildeten Vorsprungs 209 beim Lösen als Garantiesiegel und die Werkzeugwirkungsfläche will wiederum in die Ausnehmung der Schwächung 203 erster Art eintauchen. Außerdem ist eine weitere Schwächung 207 zweiter Art vorgesehen, wobei der durch sie ausgebildete Vorsprung 209a etwas größer ist als der Vorsprung 209, da die Länge s größer ist als die Länge r. Durch die unterschiedlichen Vorsprünge können gerade bei Momentensiegeln die anzuzeigenden Drehmomente exakter definiert werden, falls beispielsweise bestimmte zu fertigende Vorsprünge außerhalb fertigungstechnisch realisierbarer Abmaße liegen.

Diese Kombination verschiedener Schwächungen zweiter Art kann auch für Momentensiegel verwendet werden, wobei dann beispielsweise eine invertierte Ausgestaltung des Antriebs 201 aus Fig. 18 verwendet würde. Damit könnte man die Momente für Garantiesiegel ebenfalls exakter definieren.

Es ist grundsätzlich auch eine Kombination von Garantie- und Momentensiegel sinnvoll, wobei beispielsweise in Fixierungsrichtung F ein Momentensiegel entsprechend Fig. 17a bis 17c vorliegt und in Löserichtung L beispielsweise ein Vorsprung entsprechend Fig. 15. Eine solche Kombination besteht im Prinzip auch schon mit der Schraube 31 nach Fig. 5a, Fig. 5b, wobei man die Ausnehmung 39 nicht symmetrisch sondern asymmetrisch anordnen würde, um Anzugs- und Lösemomente genau definieren zu können.

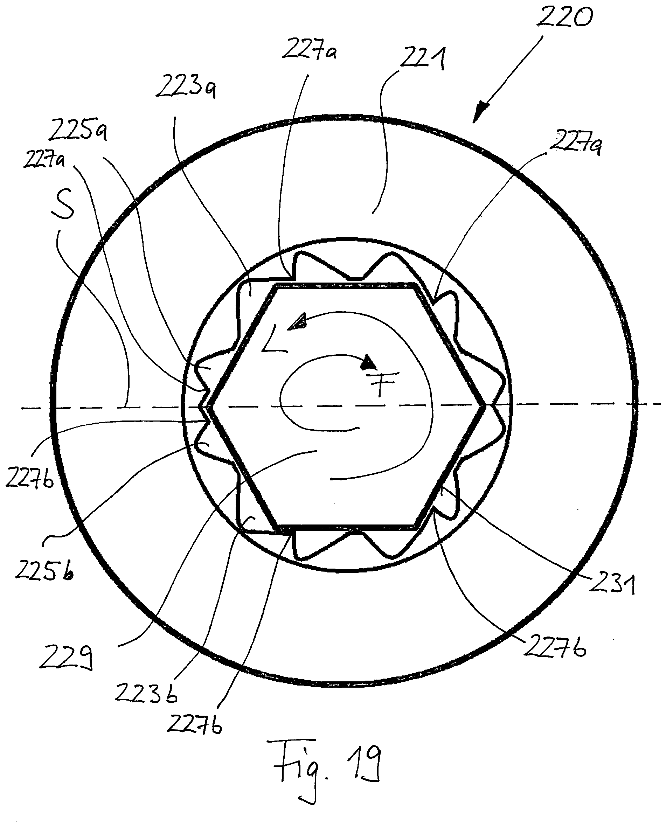

Eine solche Ausgestaltung ist in Fig. 19 gezeigt. Es ist eine Schraube 220 mit einem Innensechskant-Antrieb 221 zu erkennen, wobei der Antrieb 221 jeweils gegenüber einer Spiegelebene S spiegelsymmetrisch angeordnete Schwächungen erster Art 223a, 223b und Schwächungen zweiter Art 225a, 225b, jeweils inForm von Ausnehmungen aufweist, wobei durch die Schwächungen zweiter Art 225a, 225b jeweils Vorsprünge 227a, 227b ausgebildet werden, die gegen das Werkzeug 229 wirken. Diese besondere Ausgestaltung bewirkt ein Eintauchen der Werkzeugwirkungsfläche 231 in die Schwächungen erster Art 223a in Löserichtung L und die Schwächungen erster Art 223b in Fixierungsrichtung, wobei in Löserichtung die Vorsprünge 227b als Widerstand und in Fixierungsrichtung die Vorsprünge 227a als Widerstände überwunden werden müssen.

Zu beachten ist, dass alle eingezeichneten Abscherungslinien keine tatsächlichen Köperlinien sind, sondern nur zum besseren Verständnis eingezeichnet wurden.

Es können gegenständliche Merkmale auch als Verfahrensmerkmale Verwendung finden und Verfahrensmerkmale als gegenständliche Merkmale.

Es ist deutlich geworden, dass mit der vorliegenden Erfindung auf sehr einfache und kostengünstige Art und Weise bei Verbindungselementen eines Verbindungssystems Manipulationen durch Unbefugte leicht erkennbar sind bzw. leicht festgestellt werden kann, ob ein bestimmtes, vorher festgelegtes Moment ordnungsgemäß bei Verbindungselementen eines Verbindungssystems angewendet wurde.

**Bezugszeichenliste**

| | | | |
|---|---|---|---|
| 1 | Schraube | 53 | Sechskant |
| 3 | Antrieb | 55 | Auskragungen |
| 5 | Werkzeugangriffsfläche | 61, 63, 65, 67 | Verbindungselemente |
| | | 69, 71, 73, 75 | Antriebe |
| 7 | Kanten | 77, 79 | Werkzeugangriffsfläche |
| 9 | Materialausnehmung | | |
| a | Kantenlänge | 81, 83 | Kanten |
| b | Erstreckung | 85, 87 | Materialausnehmung |
| 11 | Spitzen | 89 | Ecke |
| 13 | Antriebsgrundkörper | e | Kantenlänge |
| 15 | Abscherungslinie | f | Erstreckung |
| 17 | Werkzeug | 91 | Spitzen |
| 19 | Werkzeugwirkungsfläche | 93 | Antriebsgrundkörper |
| | | 95 | Abscherungslinie |
| 21, 23 | Normwerkzeuge | 97, 99 | Werkzeugangriffsfläche |
| 25, 27 | Werkzeugwirkungsflächen | | |
| | | 101, 103 | Kanten |
| 31 | Schraube | 105, 107 | Materialausnehmung |
| 33 | Antrieb | 109 | Ecke |
| 35 | Werkzeugangriffsfläche | g | Kantenlänge |
| | | h | Erstreckung |
| 37 | Kanten | 111 | Spitzen |
| 39 | Materialausnehmung | 113 | Antriebsgrundkörper |
| c | Kantenlänge | 115 | Abscherungslinie |
| d | Erstreckung | 117 | Sechskantschlüssel |
| 41 | Doppelspitzen | 119 | Werkzeugwirkungsfläche |
| 43 | Antriebsgrundkörper | | |
| 45 | Abscherungslinie | 121 | Bereiche |
| 51 | Spezialschlüssel | 123 | Spitzen |
| 125 | Bereiche | 173 | 167 Fläche des Vorsprungs |
| 131 | Verbindungselement | | |
| 113 | Antrieb | 175 | Werkzeug |
| 135 | Schwächungen | 180 | Schraube |
| 137 | Füllmaterial | 181 | Innensechskant-Antrieb |
| 140 | Verbindungselement | | |
| 141 | Antrieb | 183, 185 | Schwächungen, Ausnehmungen |
| 143 | Kante | | |
| 145 | Materialausnehmung | 187 | Ecke der Innensechskant-Werkzeugangriffsfläche 189 |
| 147 | Materialausnehmung | | |
| 149 | Ecke | | |
| 151 | Spitze | | |
| 160 | Schraube | 187a | Ecke der Innensechskant-Werkzeugangriffsfläche 189 |
| 161 | Torx-Antrieb | | |
| 163, 165 | Schwächungen | | |
| 167 | Vorsprung | | |
| 169 | Werkzeugwirkungsfläche | 189 | Innensechskant-Werkzeugangriffsfläche |
| F | Fixierungsrichtung | | |
| 169a | Hauptkraft übertragende Abschnitte der Werkzeugwirkungsfläche 169 | k | Abstand |
| | | L | Löserichtung |
| | | 191 | Hauptkraft übertragende Bereiche der Werkzeugwirkungsfläche 193 |
| L | Lösungsrichtung L | | |
| 169b | Hauptkraft übertragende Abschnitte der Werkzeugwirkungsfläche 169 | | |
| | | 191a | Hauptkraft übertragender Bereich der Werkzeugwirkungsfläche 193 |
| 171 | Torx-Werkzeugangriffsfläche | | |
| | | 193 | Werkzeugwirkungsfläche |
| 195 | Bereiche der Werkzeugangriffsfläche 189 | 209, 209a | Vorsprünge |
| | | r, s | Längen |
| F | Fixierungsrichtung | 220 | Schraube |
| 197 | Vorsprung | 221 | Antrieb |
| l | Länge der Schwächung 183 | 223a, 223b | Schwächungen, Ausnehmungen |
| m | Länge des benachbarten Bereichs der Werkzeugangriffsfläche 189 | 225a, 225b | Schwächungen, Ausnehmungen |
| | | 227a, 227b | Vorsprünge |
| | | 229 | Werkzeug |
| 199 | Punkt | 231 | Werkzeugwirkungsfläche |
| 200 | Schraube | | |
| 201 | Antrieb | S | Spiegelebene |
| 203, 205, 207 | Schwächungen | | |

## Patentansprüche

1. Verbindungselement (1; 31; 61; 63; 65; 67; 131; 140; 160; 180; 200; 220) eines Verbindungssystems, insbesondere Schraube (1; 31; 61; 63; 65; 67; 131; 160; 180; 200; 220) oder Mutter, mit einer von einem Werkzeug (21; 23; 51; 117; 229), insbesondere Normwerkzeug, bestehenden Werkzeugwirkungsfläche (19; 25, 27; 119; 169; 193) angreifbaren Werkzeugangriffsfläche (5; 35; 77; 79; 97; 97) zum zumindest teilweisen formschlüssigen Kontakt mit dem Werkzeug (21; 23; 51; 117; 229) zum Verbinden oder Lösen des Verbindungssystems, wobei die Werkzeugangriffsfläche (5; 35; 77; 79; 97; 99; 171; 189) als Einfachschlitz, Kreuzschlitz, Außenmehrkant, Innenmehrkant, Außenmehrrund, Innenmehrrund, Außenvielzahn, Innenvielzahn, Ribe, Torx, Tri-Wing, Torq-Set, Torx-Tamper oder Pentalob ausgebildet ist und das Werkzeug ein Einfachschlitz-, Kreuzschlitz-, Außenmehrkant-, Innenmehrkant-, Außenmehrrund-, Innenmehrrund-, Außenvielzahn-, Innenvielzahn-, Ribe-, Torx-, Tri-Wing-, Torq-Set-, Torx-Tamper- bzw. Pentalob-Werkzeug ist, wobei die Werkzeugangriffsfläche (5; 35; 77; 79; 97; 99; 171; 189) zumindest eine Schwächung (9; 39; 85; 87; 105; 107; 135; 145, 147; 163, 165; 183, 185; 223a, 223b, 225a, 225b) aufweist, die beim Ausüben eines bestimmten Moments auf die Werkzeugangriffsfläche durch die Werkzeugwirkungsfläche (19; 25, 27; 119; 169; 193) des Werkzeugs (21; 23; 51; 117; 229) eine Verformung der Schwächung und/oder zumindest eines an die Schwächung angrenzenden Bereichs bewirkt, um so eine unbefugte Benutzung anzuzeigen und/oder eine befugte Benutzung mit ausreichend großem Moment anzuzeigen, **dadurch gekennzeichnet, dass** eine erste Art Schwächung vorgesehen ist, die der Werkzeugwirkungsfläche beim Lösen bzw. Fixieren einen ersten Widerstand entgegenstellt, und eine zweite Art Schwächung (147; 165; 185; 225a, 225b) vorgesehen ist, die der Werkzeugwirkungsfläche beim Lösen bzw. Fixieren einen zweiten Widerstand entgegenstellt.

2. Verbindungselement (1; 31; 61; 63; 65; 67; 131; 140; 160; 180; 200; 220) nach Anspruch 1, **dadurch gekennzeichnet, dass** die Werkzeugangriffsfläche (5; 35; 77; 79; 97; 99; 171; 189) mehrere Bereiche aufweist, wobei zumindest ein Bereich, bevorzugt zumindest die Hälfte der Anzahl dieser Bereiche mit zumindest einer Schwächung (9; 39; 85; 87; 105; 107; 135; 145, 147; 163, 165; 183, 185; 223a, 223b, 225a, 225b) versehen ist.

3. Verbindungselement (1; 31; 61; 63; 65; 67; 131; 140; 160; 180; 200; 220) nach Anspruch 1 oder 2, **dadurch gekennzeichnet, dass** die Schwächung (9; 39; 85; 87; 105; 107; 135; 145, 147; 163, 165; 183, 185; 223a, 223b, 225a, 225b) am oder in der Nähe eines Abschnittes des Bereiches angeordnet ist, an dem beim bestimmungsgemäßen Gebrauch des Werkzeugs die Hauptkraft von dem Werkzeug (21; 23; 51; 117) auf die Werkzeugangriffsfläche (5; 35; 77; 79; 97; 99; 171; 189) übertragen wird.

4. Verbindungselement (1; 31) nach einem der vorherigen Ansprüche, **dadurch gekennzeichnet, dass** die Schwächung (9; 39; 145) in Bezug auf die Symmetrie der Werkzeugangriffsfläche (5; 35) symmetrisch angeordnet ist.

5. Verbindungselement (61; 63; 65; 67; 131; 140; 160; 180; 200; 220) nach einem der Ansprüche 1 bis 3, **dadurch gekennzeichnet, dass** die Schwächung (85; 87; 105; 107; 135; 147; 163, 165; 183, 185; 223a, 223b, 225a, 225b) in Bezug auf die Symmetrie der Werkzeugangriffsfläche (77; 79; 97; 99; 171; 189) asymmetrisch angeordnet ist.

6. Verbindungselement (1; 31; 61; 63; 65; 67; 131; 140; 160; 180; 200; 220) nach einem der vorherigen Ansprüche, **dadurch gekennzeichnet, dass** die Schwächung als Materialausnehmung (9; 39; 85; 87; 105; 107; 145; 147; 163, 165; 183, 185; 223a, 223b, 225a, 225b) und/oder als Materialveränderung (135) ausgebildet ist.

7. Verbindungselement (140; 160; 180; 200; 220) nach einem der vorherigen Ansprüche, **dadurch gekennzeichnet, dass** zwei verschiedene Arten von Schwächungen vorgesehen sind.

8. Verbindungselement (1; 31; 61; 63; 65; 67; 131; 140; 160; 180; 200; 220) nach einem der vorherigen Ansprüche, **dadurch gekennzeichnet, dass** die erste Art Schwächung als Ausnehmung ausgebildet ist, in die die Werkzeugwirkungsfläche beim Lösen und/oder Fixieren eintaucht.

9. Verbindungselement (1; 31; 160; 180; 200; 220) nach einem der vorherigen Ansprüche, **dadurch gekennzeichnet, dass** die Länge (b; m) der Schwächung (9; 183) über der Werkzeugangriffsfläche (5; 189) zumindest gleich ist der Länge (a; I) des benachbarten Bereichs der Werkzeugangriffsfläche (5; 189).

10. Verbindungselement (140; 160; 180; 200; 220) nach einem der vorherigen Ansprüche, **dadurch gekennzeichnet, dass** der zweite Widerstand bevorzugt durch eine Sollbruch- oder -verformungsstelle (151; 167; 197) bereitgestellt ist, wobei die Sollbruch- bzw. -verformungsstelle dadurch gebildet ist, dass die zweite Schwächung durch eine Hinterschneidung (165) ausgebildet ist.

11. Verbindungselement (1; 31; 61; 63; 65; 67; 131; 140; 160; 180; 200; 220) nach einem der vorherigen Ansprüche, **dadurch gekennzeichnet, dass** zumindest einer der Parameter aus der Gruppe Anzahl der Schwächungen, Form und Dimension der Schwächung, Verwendung verschiedener Arten von Schwächungen und Dimension des Bereichs, an dem beim bestimmungsgemäßen Gebrauch des Werkzeugs die Hauptkraft von dem Werkzeug auf die Werkzeugangriffsfläche übertragen wird, so eingestellt ist, dass eine Verformung der Schwächung und/oder zumindest eines an die Schwächung angrenzenden Bereichs bei Anwendung eines Moments vorher festgelegter Größe erfolgt.

12. Verfahren zum Versehen eines Verbindungssystems mit einer Verschlussversiegelung und/oder einer Momentenanzeige, wobei ein Verbindungselement (1; 31; 61; 63; 65; 67; 131; 140; 160; 180; 200; 220) des Verbindungssystems, insbesondere eine Schraube (1; 31; 61; 63; 65; 67; 131; 140; 160; 180; 200; 220) oder eine Mutter, mit einer von einem Werkzeug (21; 23; 51; 117; 194; 229), insbesondere Normwerkzeug, angreifbaren Werkzeugangriffsfläche (5; 35; 77; 79; 97; 99; 171; 189) zum zumindest teilweisen formschlüssigen Kontakt mit dem Werkzeug (21; 23; 51; 117; 194; 229) zum Verbinden oder Lösen des Verbindungssystems versehen ist, wobei die Werkzeugangriffsfläche (5; 35; 77; 79; 97; 97) mit zumindest einer Schwächung (9; 39; 85; 87; 105; 107; 135) versehen wird, die beim Ausüben eines bestimmten Moments auf die Werkzeugangriffsfläche eine Verformung der Schwächung und/oder zumindest eines an die Schwächung angrenzenden Bereichs bewirkt, um so eine unbefugte Benutzung anzuzeigen und/oder eine befugte Benutzung mit ausreichend großem Moment anzuzeigen, **dadurch gekennzeichnet, dass** eine erste Art Schwächung vorgesehen ist, die der Werkzeugwirkungsfläche beim Lösen bzw. Fixieren einen ersten Widerstand entgegenstellt, und eine zweite Art Schwächung (147; 165; 185; 225a, 225b) vorgesehen ist, die der Werkzeugwirkungsfläche beim Lösen bzw. Fixieren einen zweiten Widerstand entgegenstellt.

13. Verfahren nach Anspruch 12, **dadurch gekennzeichnet, dass** ein Verbindungselement (1) nach einem der Ansprüche 1 bis 11 verwendet wird.

## Claims

1. Connecting element (1; 31; 61; 63; 65; 67; 131; 140; 160; 180; 200; 220) of a connection system, in particular screw (1; 31; 61; 63; 65; 67; 131; 160; 180; 200; 220) or nut, with a tool working surface (5; 35; 77; 79; 97; 97) that can be acted upon by a tool action surface (19; 25, 27; 119; 169; 193) provided on a tool (21; 23; 51; 117; 229), in particular standard tool, for at least partial form-locking contact with the tool (21; 23; 51; 117; 229) for connecting or detaching the connection system, wherein the tool working surface (5; 35; 77; 79; 97; 99; 171; 189) is formed as a plain slot, cross recess, external polygon, internal polygon, external polylobe, internal polylobe, external triple square, internal triple square, Ribe, Torx, tri-wing, torq-set, Torx-Tamper or pentalobe, and the tool is a plain slot, cross recess, external polygon, internal polygon, external polylobe, internal polylobe, external triple square, internal triple square, Ribe, Torx, tri-wing, torq-set, Torx-Tamper or pentalobe tool, wherein the tool working surface (5; 35; 77; 79; 97; 99; 171; 189) has at least one weakened portion (9; 39; 85; 87; 105; 107; 135; 145, 147; 163, 165; 183, 185; 223a, 223b, 225a, 225b) which upon exertion of a particular torque on the tool working surface by the tool action surface (19; 25, 27; 119; 169; 193) of the tool (21; 23; 51; 117; 229) brings about deformation of the weakened portion and/or of at least one region adjoining the weakened portion, in order thus to indicate unauthorised use and/or to indicate authorised use with a sufficiently large torque, **characterised in that** a first type of weakened portion is provided which poses a first resistance against the tool action surface upon detachment or fixing, and a second type of weakened portion (147; 165; 185; 225a, 225b) is provided which poses a second resistance against the tool action surface upon detachment or fixing.

2. Connecting element (1; 31; 61; 63; 65; 67; 131; 140; 160; 180; 200; 220) according to Claim 1, **characterised in that** the tool working surface (5; 35; 77; 79; 97; 99; 171; 189) has a plurality of regions, with at least one region, preferably at least half the number of these regions, being provided with at least one weakened portion (9; 39; 85; 87; 105; 107; 135; 145,147; 163, 165; 183, 185; 223a, 223b, 225a, 225b).

3. Connecting element (1; 31; 61; 63; 65; 67; 131; 140; 160; 180; 200; 220) according to Claim 1 or 2, **characterised in that** the weakened portion (9; 39; 85; 87; 105; 107; 135; 145, 147; 163, 165; 183, 185; 223a, 223b, 225a, 225b) is arranged on or in the vicinity of a portion of that region at which, when the tool is used as intended, the main force is transmitted from the tool (21; 23; 51; 117) to the tool working surface (5; 35; 77; 79; 97; 99; 171; 189).

4. Connecting element (1; 31) according to one of the preceding claims, **characterised in that** the weakened portion (9; 39; 145) is arranged symmetrically in relation to the symmetry of the tool working surface (5; 35).

5. Connecting element (61; 63; 65; 67; 131; 140; 160; 180; 200; 220) according to one of Claims 1 to 3, **characterised in that** the weakened portion (85; 87; 105; 107; 135; 147; 163, 165; 183, 185; 223a, 223b, 225a, 225b) is arranged asymmetrically in relation to the symmetry of the tool working surface (77; 79; 97; 99; 171; 189).

6. Connecting element (1; 31; 61; 63; 65; 67; 131; 140; 160; 180; 200; 220) according to one of the preceding claims, **characterised in that** the weakened portion is formed as a material recess (9; 39; 85; 87; 105; 107; 145; 147; 163, 165; 183, 185; 223a, 223b, 225a, 225b) and/or as a change in material (135).

7. Connecting element (140; 160; 180; 200; 220) according to one of the preceding claims, **characterised in that** two different types of weakened portions are provided.

8. Connecting element (1; 31; 61; 63; 65; 67; 131; 140; 160; 180; 200; 220) according to one of the preceding claims, **characterised in that** the first type of weakened portion is formed as a recess into which the tool action surface penetrates upon detachment and/or fixing.

9. Connecting element (1; 31; 160; 180; 200; 220) according to one of the preceding claims, **characterised in that** the length (b; m) of the weakened portion (9; 183) over the tool working surface (5; 189) is at least equal to the length (a; I) of the adjacent region of the tool working surface (5; 189).

10. Connecting element (140; 160; 180; 200; 220) according to one of the preceding claims, **characterised in that** the second resistance is preferably provided by a predetermined breaking or deformation point (151; 167; 197), the predetermined breaking or deformation point being formed **in that** the second weakened portion is formed by an undercut (165).

11. Connecting element (1; 31; 61; 63; 65; 67; 131; 140; 160; 180; 200; 220) according to one of the preceding claims, **characterised in that** at least one of the parameters from the group consisting of number of weakened portions, shape and dimension of the weakened portion, use of different types of weakened portions and dimension of that region on which, when the tool is used as intended, the main force is transmitted from the tool to the tool working surface, is set such that deformation of the weakened portion and/or of at least one region adjoining the weakened portion takes place upon application of a torque of predetermined amount.

12. Method for providing a connection system with a closure seal and/or a torque indication, wherein a connecting element (1; 31; 61; 63; 65; 67; 131; 140; 160; 180; 200; 220) of the connection system, in particular a screw (1; 31; 61; 63; 65; 67; 131; 140; 160; 180; 200; 220) or a nut, is provided with a tool working surface (5; 35; 77; 79; 97; 99; 171; 189) which can be acted upon by a tool (21; 23; 51; 117; 194; 229), in particular standard tool, for at least partial form-locking contact with the tool (21; 23; 51; 117; 194; 229) for connecting or detaching the connection system, wherein the tool working surface (5; 35; 77; 79; 97; 97) is provided with at least one weakened portion (9; 39; 85; 87; 105; 107; 135) which upon exertion of a particular torque on the tool working surface brings about deformation of the weakened portion and/or of at least one region adjoining the weakened portion, in order thus to indicate unauthorised use and/or to indicate authorised use with a sufficiently large torque, **characterised in that** a first type of weakened portion is provided which poses a first resistance against the tool action surface upon detachment or fixing, and a second type of weakened portion (147; 165; 185; 225a, 225b) is provided which poses a second resistance against the tool action surface upon detachment or fixing.

13. Method according to Claim 12, **characterised in that** a connecting element (1) according to one of Claims 1 to 11 is used.

## Revendications

1. Elément de liaison (1 ; 31; 61; 63 ; 65 ; 67 ; 131 ; 140 ; 160 ; 180 ; 200 ; 220) d'un système de liaison, en particulier vis (1 ; 31 ; 61 ; 63 ; 65 ; 67 ; 131 ; 160 ; 180 ; 200 ; 220) ou écrou, avec une surface d'engagement d'outil (5 ; 35 ; 77 ; 79 ; 97 ; 97) sur laquelle on peut agir au moyen d'une surface d'agissement outil (19; 25, 27; 119; 169; 193) prévue à un outil (21 ; 23 ; 51 ; 117 ; 229), en particulier un outil standard, pour établir un contact au moins en partie par complémentarité de forme avec l'outil (21 ; 23 ; 51 ; 117 ; 229) pour relier ou desserrer le système de liaison, dans lequel la surface d'engagement d'outil (5 ; 35 ; 77 ; 79 ; 97 ; 99 ; 171 ; 189) est réalisée sous la forme d'une entaille simple, d'une entaille croisée, d'un polygone extérieur, d'un polygone intérieur, un multi-rond extérieure, un multi-rond intérieure, d'un multi-dent extérieur, d'un multi-dent intérieur, d'un embout Ribe, d'un embout Torx, d'un embout Tri-Wing, d'un embout Torq-Set, d'un embout Torx-Tamper ou Pentalobe et l'outil est un outil à entaille simple, un outil à entaille croisée, un outil à polygone extérieur, un outil à polygone intérieur, un outil à lobe multiple extérieur, un outil à lobe multiple intérieur, un outil à denture extérieure, un outil à denture intérieure, un outil Ribe, un outil Torx, un outil Tri-Wing, un outil Torq-Set, un outil Torx-Tamper ou Pentalobe, dans lequel la surface d'engagement d'outil (5 ; 35 ; 77 ; 79 ; 97 ; 99 ; 171 ; 189) présente au moins un affaiblissement (9 ; 39 ; 85 ; 87 ; 105 ; 107 ; 135 ; 145, 147 ; 163, 165 ; 183, 185 ; 223a, 223b, 225a, 225b), qui entraîne une déformation de l'affaiblissement et/ou au moins d'une zone jouxtant l'affaiblissement lorsqu'un couple défini est exercé sur la surface d'engagement d'outil par la surface d'agissement outil (19 ; 25, 27 ; 119 ; 169 ; 193) de l'outil (21 ; 23 ; 51 ; 117 ; 229) afin d'indiquer ainsi une utilisation non autorisée et/ou d'indiquer une utilisation autorisée avec un couple suffisamment grand, **caractérisé en ce qu'**est prévu un premier type d'affaiblissement, qui oppose à la surface d'agissement outil lors du desserrage ou de la fixation une première résistance, et est prévu un deuxième type d'affaiblissement (147 ; 165 ; 185 ; 225a, 225b), qui oppose à la surface d'agissement outil lors du desserrage ou de la fixation une deuxième résistance.

2. Elément de liaison (1 ; 31 ; 61 ; 63 ; 65 ; 67 ; 131 ; 140 ; 160 ; 180 ; 200 ; 220) selon la revendication 1, **caractérisé en ce que** la surface d'engagement d'outil (5 ; 35 ; 77 ; 79 ; 97 ; 99 ; 171 ; 189) présente plusieurs zones, dans lequel au moins une zone, de manière préférée au moins la moitié du nombre desdites zones, est pourvue d'au moins un affaiblissement (9 ; 39 ; 85 ; 87 ; 105 ; 107 ; 135 ; 145, 147 ; 163, 165 ; 183, 185 ; 223a, 223b, 225a, 225b).

3. Elément de liaison (1 ; 31 ; 61 ; 63 ; 65 ; 67 ; 131 ; 140 ; 160 ; 180 ; 200 ; 220) selon la revendication 1 ou 2, **caractérisé en ce que** l'affaiblissement (9 ; 39 ; 85 ; 87 ; 105 ; 107 ; 135 ; 145, 147 ; 163, 165 ; 183, 185 ; 223a, 223b, 225a, 225b) est disposé sur ou à proximité d'un tronçon de la zone, sur lequel la force principale est transférée de l'outil (21 ; 23 ; 51 ; 117) sur la surface d'engagement d'outil (5 ; 35 ; 77 ; 79 ; 97 ; 99 ; 171 ; 189) lorsque l'outil est utilisé conformément à son usage prévu.

4. Elément de liaison (1 ; 31) selon l'une quelconque des revendications précédentes, **caractérisé en ce que** l'affaiblissement (9 ; 39 ; 145) est disposé de manière symétrique par rapport à la symétrie de la surface d'engagement d'outil (5 ; 35).

5. Elément de liaison (61 ; 63 ; 65 ; 67 ; 131 ; 140 ; 160 ; 180 ; 200 ; 220) selon l'une quelconque des revendications 1 à 3, **caractérisé en ce que** l'affaiblissement (85 ; 87 ; 105 ; 107 ; 135 ; 147 ; 163, 165 ; 183, 185 ; 223a, 223b, 225a, 225b) est disposé de manière asymétrique par rapport à la symétrie de la surface d'engagement d'outil (77 ; 79 ; 97 ; 99 ; 171 ; 189).

6. Elément de liaison (1 ; 31 ; 61 ; 63 ; 65 ; 67 ; 131 ; 140 ; 160 ; 180 ; 200 ; 220) selon l'une quelconque des revendications précédentes, **caractérisé en ce que** l'affaiblissement est réalisé sous la forme d'un évidement de matériau (9 ; 39 ; 85 ; 87 ; 105 ; 107 ; 145 ; 147 ; 163, 165 ; 183, 185 ; 223a, 223b, 225a, 225b) et/ou sous la forme d'une modification de matériau (135).

7. Elément de liaison (140 ; 160 ; 180 ; 200 ; 220) selon l'une quelconque des revendications précédentes, **caractérisé en ce que** sont prévus deux différents types d'affaiblissements.

8. Elément de liaison (1 ; 31 ; 61 ; 63 ; 65 ; 67 ; 131 ; 140 ; 160 ; 180 ; 200 ; 220) selon l'une quelconque des revendications précédentes, **caractérisé en ce que** le premier type d'affaiblissement est réalisé sous la forme d'un évidement, dans lequel la surface d'agissement outil s'enfonce lors du desserrage et/ou de la fixation.

9. Elément de liaison (1 ; 31 ; 160 ; 180 ; 200 ; 220) selon l'une quelconque des revendications précédentes, **caractérisé en ce que** la longueur (b ; m) de l'affaiblissement (9 ; 183) par-dessus la surface d'engagement d'outil (5 ; 189) est au moins égale à la longueur (a ; I) de la zone adjacente de la surface d'engagement d'outil (5, 189).

10. Elément de liaison (140 ; 160 ; 180 ; 200 ; 220) selon l'une quelconque des revendications précédentes, **caractérisé en ce que** la deuxième résistance est fournie de manière préférée par un emplacement de rupture théorique ou de déformation (151 ; 167 ; 197), dans lequel l'emplacement de rupture théorique ou de déformation est formé **en ce que** le deuxième affaiblissement est réalisé par une contre-dépouille (165).

11. Elément de liaison (1 ; 31 ; 61 ; 63 ; 65 ; 67 ; 131 ; 140 ; 160 ; 180 ; 200 ; 220) selon l'une quelconque des revendications précédentes, **caractérisé en ce qu'**au moins un des paramètres issu du groupe nombre des affaiblissements, forme et dimension de l'affaiblissement, utilisation des différents types d'affaiblissements et dimension de la zone, sur laquelle la force principale est transférée depuis l'outil sur la surface d'engagement d'outil lorsque l'outil est utilisé conformément à l'usage prévu, est réglé de telle sorte qu'une déformation de l'affaiblissement et/ou au moins d'une zone jouxtant l'affaiblissement a lieu lors de l'application d'un couple d'une grandeur arrêtée au préalable.

12. Procédé pour doter un système de liaison d'un scellement de fermeture et/ou d'une indication de couple, dans lequel un élément de liaison (1 ; 31 ; 61 ; 63 ; 65 ; 67 ; 131 ; 140 ; 160 ; 180 ; 200 ; 220) du système de liaison, en particulier une vis (1 ; 31 ; 61 ; 63 ; 65 ; 67 ; 131 ; 140 ; 160 ; 180 ; 200 ; 220) ou un écrou, est pourvu d'une surface d'engagement d'outil (5 ; 35 ; 77 ; 79 ; 97 ; 99 ; 171 ; 189) pouvant s'engager avec un outil (21 ; 23 ; 51 ; 117 ; 194 ; 229), en particulier un outil standard, pour établir un contact au moins en partie par complémentarité de forme avec l'outil (21 ; 23 ; 51 ; 117 ; 194 ; 229) pour relier ou desserrer le système de liaison, dans lequel la surface d'engagement d'outil (5 ; 35 ; 77 ; 79 ; 97 ; 97) est pourvue d'au moins un affaiblissement (9 ; 39 ; 85 ; 87 ; 105 ; 107 ; 135), qui entraîne une déformation de l'affaiblissement et/ou au moins d'une zone jouxtant l'affaiblissement lorsqu'un couple défini est exercé sur la surface d'engagement d'outil afin d'indiquer ainsi une utilisation non autorisée et/ou d'indiquer une utilisation autorisée avec un couple suffisamment grand, **caractérisé en ce qu'**un premier type d'affaiblissement est prévu, qui oppose à la surface d'agissement outil une première résistance lors du desserrage ou de la fixation, et est prévu un deuxième type d'affaiblissement (147 ; 165 ; 185 ; 225a, 225b), qui oppose à la surface d'agissement outil une deuxième résistance lors du desserrage ou de la fixation.

13. Procédé selon la revendication 12, **caractérisé en ce qu'**un élément de liaison (1) selon l'une quelconque des revendications 1 à 11 est utilisé.
